# EUROPEAN PATENT SPECIFICATION

(11) **EP 0 520 460 B1**
(45) Date of publication and mention of the grant of the patent: **14.08.1996**
(21) Application number: 92110760.3
(22) Date of filing: 26.06.1992
(51) Int. Cl.: G11B 5/72

(54) **Method of fabricating a magnetic recording medium and use of the same for recording input video signals**
Verfahren zur Herstellung von magnetischen Aufzeichnungsträgern und deren Verwendung für die Aufnahme von Videosignalen
Procédé pour fabriquer un milieu d'enregistrement magnétique et l'utilisation dudit mileu pour l'enregistrement des signaux de vidéo.

(30) Priority: 28.06.1991 JP 159167/91; 28.12.1991 JP 359089/91
(43) Date of publication of application: 30.12.1992
(73) Proprietor: SONY CORPORATION, Tokyo 141 (JP)
(72) Inventor: Sato, Kenichi, Shinagawa-ku, Tokyo (JP); Chiba, Kazunobu, Shinagawa-ku, Tokyo (JP); Arisaka, Yuichi, Shinagawa-ku, Tokyo (JP)
(74) Representative: Körber, Wolfhart, Dr.rer.nat.

(56) References cited:
- US-A- 4 411 963
- US-A- 4 889 767
- PATENT ABSTRACTS OF JAPAN vol. 7, no. 101 (P-194)28 April 1983

## Description

### SPECIFICATION

### MAGNETIC RECORDING MEDIUM AND A METHOD OF FABRICATING THE SAME

### BACKGROUND OF THE INVENTION

### Field of the Invention

The present invention relates to a method for fabricicating a magnetic recording medium having a magnetic layer consisting of magnetic metal thin films and a method for recording input video signals on the magnetic recording medium.

### Description of the Prior Art

High-density recording has been promoted for the improvement of picture quality in recording pictures by a VTR and there have been proposed, to enable high-density recording, magnetic recording media employing magnetic metal thin films of magnetic metals, such as Co, a Co-Ni alloy, a Co-Cr alloy and Co-O, formed by a plating process or a vacuum thin film forming process, such as a sputtering process or a vacuum evaporation process, on a support, such as a polyester film, a polyamide film or a polyimide film.

For example, an evaporation magnetic tape provided with a magnetic layer formed by making the vapor of a magnetic metal fall obliquely on the surface of a support film, i.e., that generally known as an oblique evaporation magnetic tape, has excellent properties that the construction of the magnetic layer facilitates recording operation using a ring head and the demagnetization of recorded magnetic signals grows at a low rate. This evaporation magnetic tape has already been used practically as a magnetic recording medium for 8 mm VTRs.

However, the evaporation magnetic tape has problems in durability and corrosion resistance because the magnetic layer is formed of a metal film and has a nearly specular surface. To secure sufficiently high durability by reducing the substantial area of contact between a magnetic tape and a magnetic head, an evaporation magnetic tape for use on an 8 mm VTR comprises a base film provided on its surface with minute projections that affect the surface irregularity of a magnetic metal thin film formed on the surface of the base film. The magnetic metal thin film of some evaporation magnetic tapes is coated with a lubricant and/or a rust preventive material to secure practically satisfactory durability and reliability. These measures to enhance the durability and reliability of evaporation magnetic recording media, however, are not sufficiently effective for magnetic recording media for professional uses and digital VTRs and research and development activities have been made to develop further advanced measures.

For example, errors that cause defects in a recording pattern are made and a picture in which some digital signals are missed out is displayed on a screen if the magnetic layer is corroded. Accordingly, the magnetic layer must have sufficiently high corrosion resistance and the surface of the magnetic layer must be finished by effective surface treatment.

The speed of the magnetic tape relative to a magnetic head on a digital VTR is twice the speed of a magnetic tale relative to a magnetic head or higher on an 8 mm VTR. Therefore, the improvement of the surface properties of a magnetic tape by the minute irregularities and a lubricant is not sufficiently effective on the improvement of the durability.

Attempts have been made to improve the corrosion resistance and durability of magnetic tapes by forming an oxide layer over the surface of the magnetic metal thin film by oxidation. However, the oxide layer is unsatisfactory in structural compactness and somewhat permeable to moisture. Accordingly, it is essential to design a magnetic recording medium so that the corrosion resistance and durability of the magnetic recording medium are sufficiently high when the magnetic recording medium is intended for use on professional VTRs and digital VTRs which records digital video signals, particularly, digital VTRs which compress digital video signals without entailing reproduction distortion and record compressed video signals.

In US 4,889,767 a magnetic recording medium having corrosion resistance is described. The magnetic recording medium therein is provided with a non-magnetic substrate, an undercoat layer, an intermediate layer of non-magnetic metal, a metal thin film non-magnetic layer, a protective layer of a non-magnetic metal, a protective carbon film and a topcoat layer disposed one on top of the other.

US 4,411,963 describes a magnetic recording film deposited over a based layer on a substrate. A protective layer is deposited over the magnetic film and a solid lubricant layer is deposited over the protective layer. Furthermore, this document describes a method for making these recording members by sputtering deposition.

Furthermore, JP 58026320 (patent abstracts of Japan) describes a magnetic recording medium for high density recording having practical corrosion resistance. The magnetic recording medium described therein comprises a titanum film on the surface of a magnetic substance layer.

### SUMMARY OF THE INVENTION

It is an object of the present invention to provide a method for fabricating a magnetic recording medium capable of efficiently fabricating a recording medium having excellent corrosion resistance and durability.

Another object of the invention is to provide a method for recording input video signals on a magnetic recording medium which compresses digital video signals without entailing significant reproduction distortion and records the compressed digital video signals, to record digital video signals and to reproduce the recorded digital video signals so that the reproduced digital video signals include only a few errors.

In one aspect of the present invention, a magnetic recording medium comprises a nonmagnetic support, a magnetic metal thin film formed as a magnetic layer on the nonmagnetic support, and a corrosion-resistant protective film of a corrosion-resistant metal or a laminate protective film consisting of a corrosion-resistant protective film of a corrosion-resistant metal and a durable protective film of a hard material, formed on the magnetic metal thin film.

A method of fabricating a magnetic recording medium comprises forming a protective layer by a sputtering process on a nonmagnetic support provided with a magnetic metal thin film as a magnetic layer on one major surface thereof and traveling along the circumference of a cooling cylinder, wherein a target of a corrosion-resistant material and a target of a hard material are arranged around the cooling cylinder or a composite target of a corrosion-resistant material and a hard material is placed near the circumference of the cooling cylinder to form the protective layer in a laminate structure consisting of a corrosion-resistant film of the corrosion-resistant material and a durable protective film of the hard material.

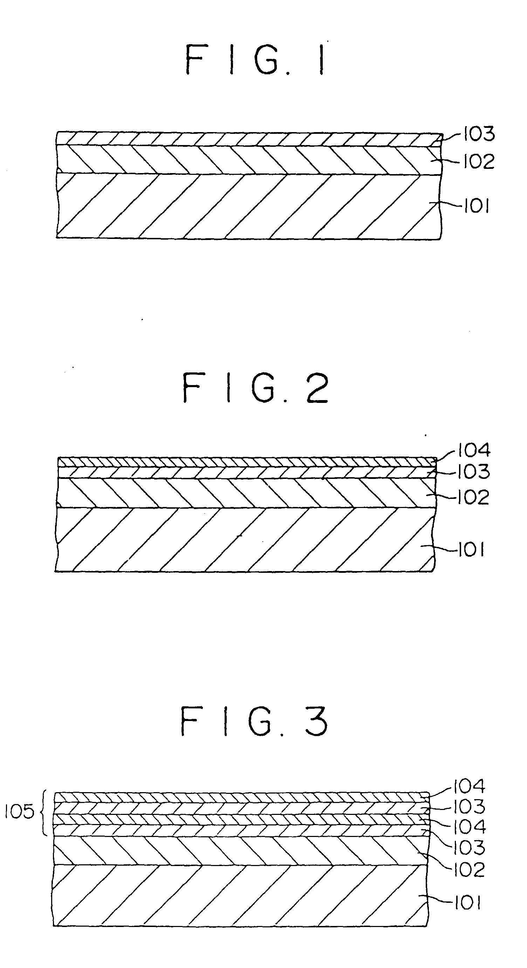

As shown in Fig. 1, a magnetic recording medium in accordance with the present invention comprises a nonmagnetic support 101, a magnetic metal thin film 102 as a magnetic layer formed on the nonmagnetic support 101, and a corrosion-resistant protective film 103 of a corrosion-resistant metal formed over the magnetic metal thin film 102.

The magnetic metal thin film 102 may be formed of any magnetic material generally used for forming a magnetic metal thin film for an evaporation magnetic tape, for example, a metal, such as Fe, Co or Ni, a ferromagnetic alloy, such as a Fe-Cu alloy, a Co-Cu alloy, Co-Pt alloy, a Co-Cr alloy, a Co-Ni alloy, a Co-Ni-Cr alloy, a Co-Ta alloy, a Co-Cr-Ta alloy, a Co-Cr-V alloy or a Fe-Co alloy, such a metal containing additives or such an alloy containing additives.

The magnetic metal thin film 102 of such a material may be a single film or a laminate film. A ground layer or an intermediate layer of a metal or a metal oxide may be formed between the nonmagnetic support 101 and the magnetic metal thin film 102 or, if the magnetic metal thin film 102 is a laminate film, between the component film of the magnetic metal thin film 102.

The magnetic metal thin film 102 may be formed by any suitable thin film forming process, such as a vacuum evaporation process, a sputtering process or an ion plating process.

The nonmagnetic support 101 may be of any material generally used for forming a nonmagnetic support of magnetic recording media of this kind.

The corrosion-resistant protective film 103 of a corrosion-resistant metal overlying the magnetic metal thin film 102 improves the corrosion resistance of the magnetic metal thin film by preventing the magnetic metal thin film being permeated by moisture. The corrosion-resistant metal is Cr, Cu, Ni, W, Ta, Mo, Zn, Zr, Pt, V, Au, In, Al, Sn, Pb, a Cr-Ti alloy, a Cr-Zr alloy, a Cr-Nb alloy, a Cr-Ta alloy, a Cr-Al alloy, a Cr-Zn alloy, a Cu-Ni alloy or a Ni-Mo-Cr-Fe alloy (Hastelloy).

The corrosion-resistant protective film 103 may be formed by any suitable process, such as a sputtering process, a vacuum evaporation process, an ion plating process or a plasma CVD process.

Preferably, the thickness of the corrosion-resistant protective film 103 is 30 Å (3 nm) or above. If the thickness of the corrosion-resistant protective film 103 is less than 30 Å, the corrosion-resistant performance of the corrosion-resistant film 103 is unsatisfactory.

The corrosion-resistant film 103 may be coated with a durable protective film 104 of a hard material as shown in Fig. 2. The hard material is SiO₂, Si₃N₄, SiNₓ, BN, ZrO₂, Al₂O₃, MoS₂, TiN, SiC, carbon, TiO₂ or TiC.

The durable protective film 104 may be formed, similarly to the corrosion-resistant film 103, by any suitable process, such as a sputtering process, a vacuum evaporation process, an ion plating process or a plasma CVD process.

Preferably, the thickness of the durable protective film 104 is 20 Å (2 nm) or above. The durability of the durable protective film 104 is unsatisfactory if the thickness of the durable protective film 104 is less than 20 Å.

If the protective layer consisting of the corrosion-resistant film 103 and the durable protective film 104 is excessively thick, reproduced output decreases due to spacing and increases error rate and hence the preferable thickness of the protective layer is 500 Å (50 nm) or below. Therefore, the optimum thickness of the corrosion-resistant protective film 103 is in the range of 30 Å (3 nm) to 480 Å (48 nm) and the optimum thickness of the durable protective film 104 is in the range of 20 Å (2 nm) to 470 Å (47nm)

If the magnetic recording medium is provided with both the corrosion-resistant film 103 and the durable protective film 104 in a laminate structure, it is preferable to enable the corrosion-resistant film 103 and the durable protective film 104 to exhibit their full performance that the durable protective film 104 overlies the corrosion-resistant film 103. When the corrosion-resistant film 103 and the durable protective film 104 are so formed, the magnetic recording medium has excellent corrosion resistance and durability.

A magnetic recording medium in another aspect of the present invention may comprise, as shown in Fig. 3, a nonmagnetic support 101, a magnetic metal thin film 102 as a magnetic layer formed on the nonmagnetic support 101, and a multilayer laminate protective layer 105 consisting of a plurality of laminate layers of corrosion-resistant protective films 103 of a corrosion-resistant metal and durable protective films 104 of a hard material, overlying the magnetic metal thin film 102. The multilayer laminate protective layer 105 consisting of the corrosion-resistant protective films 103 and the durable protective films 104 may be either of a discrete laminate construction in which the component films are separated by distinct interfaces or of a complex laminate construction of a composition periodically varying in the direction of the thickness in which the corrosion-resistant metal and the hard material of the adjacent component films are mixed in the interfaces.

The multilayer laminate protective layer 105 is formed by a sputtering process. In forming the multilayer laminate protective layer 105 by the sputtering process, the nonmagnetic support provided on one surface thereof with the magnetic metal thin film is fed by a feed roller so as to travel along the circumference of a cooling cylinder in an evacuated chamber, atoms of the material for forming the multilayer laminate protective layer 105 sputtered from target means of protective materials are deposited on the magnetic metal thin film to form the protective layer, and the base film carrying the magnetic metal thin film and the protective layer is taken up by a take-up roll. The target means is a plurality of targets or a single composite target.

The atoms of the corrosion-resistant metal and those of the hard material sputtered from the targets of the corrosion-resistant metal and the targets of the hard material arranged alternately along the direction of travel of the nonmagnetic support deposit on the magnetic metal thin film while the base film travels along the circumference of the cooling cylinder, to form the multilayer laminate protective film. The targets of the corrosion-resistant metal and those of the hard material may be arranged contiguously so that these targets act as a single composite target. A multilayer laminate protective film formed by using such a composite target has a complex laminate construction in which the corrosion-resistant metal and the hard material mix in the boundaries of the corrosion-resistant film and the durable protective film. The composite target may be formed by closely arranging the corrosion-resistant metal and the hard material or by putting a pellet of the corrosion-resistant metal on the hard material.

The thickness of the protective layer of a multilayer laminate structure is 500 Å or below and, preferably, the uppermost film of the protective layer is a durable protective film.

The corrosion-resistant protective film coating the magnetic metal thin film formed as a magnetic layer on a nonmagnetic support prevents the penetration of moisture perfectly to suppress the corrosion of the magnetic metal thin film. The durable protective film having high durability and a lubricating characteristic enhances the durability of the magnetic recording medium greatly.

The magnetic recording medium of the present invention is sufficiently durable and corrosion-resistant under severe operating conditions and enables a digital VTR, which compresses digital video signals and records compressed digital video signals, to record digital video signals and to reproduce recorded digital video signals with a few errors.

The protective layer of a multilayer laminate construction can be formed without requiring any particular modification in the existing processes and existing fabricating equipment simply by arranging the targets of a corrosion-resistant metal and targets of a hard material around the cooling can in forming the protective layer on a nonmagnetic support traveling along the circumference of the cooling cylinder by a sputtering process.

### BRIEF DESCRIPTION OF THE DRAWINGS

The above and other objects, features and advantages of the present invention will become more apparent from the following description taken in connection with the accompanying drawings, in which:
Fig. 1 is a schematic sectional view of a magnetic recording medium in a first embodiment according to the present invention;
Fig. 2 is a schematic sectional view of a modification of the magnetic recording medium of Fig. 1;
Fig. 3 is a schematic sectional view of a magnetic recording medium in a second embodiment according to the present invention;
Fig. 4 is a typical view of a vacuum evaporation apparatus;
Fig. 5 is a typical view of a sputtering apparatus;
Fig. 6 is a typical view of a composite target;
Fig. 7 is a block diagram of the recording system of a signal processing unit included in a digital VTR for recording digital video signals after compressing the same so that reproduced signals are not distorted;
Fig. 8 is a block diagram of the reproducing system of the signal processing unit of Fig. 7;
Fig. 9 is a diagrammatic view of blocks for block coding;
Fig. 10 is a diagrammatic view of assistance in explaining sampling and subline;
Fig. 11 is a block diagram of a block coding circuit;
Fig. 12 is a block diagram of a channel encoder;
Fig. 13 is a block diagram of a channel decoder;
Fig. 14 is a typical plan view of assistance in explaining the disposition of magnetic heads;
Fig. 15 is a plan view of a rotary cooling cylinder around which a magnetic tape is wound; and
Fig. 16 is a front view of the rotary cooling cylinder of Fig. 15.

### DETAILED DESCRIPTION OF THE PREFERRED EMBODIMENTS

The present invention will be described hereinafter in connection with the accompanying drawings and tables showing experimental results.

### First Embodiment

A first embodiment of the present invention is a magnetic recording medium suitable for use on a digital VTR, comprising a nonmagnetic support, a magnetic metal thin film, and a protective film formed of a corrosion-resistant metal.

A sample magnetic recording medium was fabricated by a method employing a vacuum evaporation process. A major surface of a polyethylene terephthalate (PET) film, i.e., a base film, of 10 µm in thickness was coated with an emulsion containing an acrylic ester latex as a principal constituent to form minute projections of acrylic ester latex particles on the major surface. The center line average height Ra of the major surface of the base film was 0.0015 µm and the density of the minute projections was 5 × 10⁶/mm².

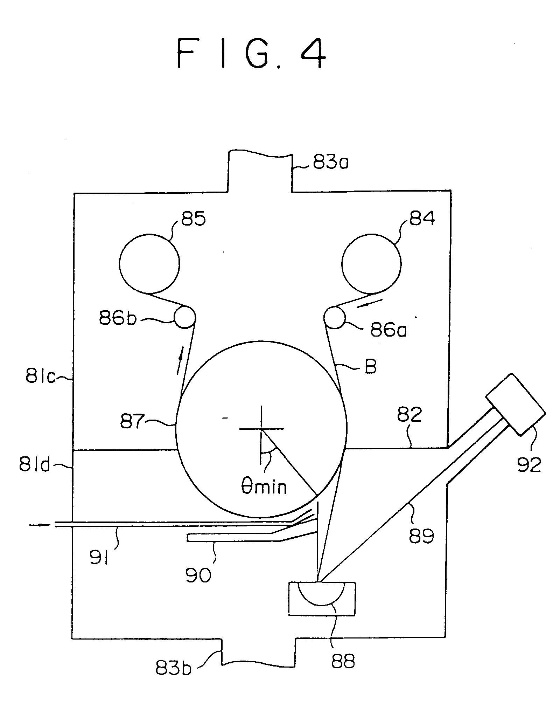

A magnetic metal thin film was formed on the base film by oblique evaporation in an oxygen atmosphere by a vacuum evaporation apparatus as shown in Fig. 4. The vacuum evaporation apparatus has vacuum vessels 81c and 81d, a partition plate 82 separating the vacuum vessels 81c and 81d, a cooling cylinder 87 disposed between the vacuum vessels 81c and 81d, and evacuating systems 83a and 83b connected respectively to the vacuum vessels 81c and 81d.

A feed roller 84 for feeding the base film B and a take-up roller 85 for taking up the base film B are disposed in the vacuum vessel 81c. The base film B is guided by guide rollers 86a and 86b so as to travel along the circumference of the cooling cylinder 87. An evaporation source 88 is disposed opposite to the cooling cylinder 87 in the vacuum vessel 81d. A screening plate 90 for determining the incidence angle of the evaporated metal on the surface of the base film B, and an oxygen supply pipe 91 are arranged near the cooling cylinder 87. The evaporation source may be any suitable material, for example, an elementary metal, such as Fe, Co or Ni, a CoNi alloy or a mixture of elements.

The evaporation source 88 is heated and evaporated by electron beams 89 projected by an electron gun 92 while the base film B runs along the circumference of the cooling cylinder 87 to form a magnetic metal thin film on the surface of the base film B by oblique evaporation. In this embodiment, the evaporation source 88 was Co, the vacuum vessels 81c and 81d were evacuated to a vacuum of 1 × 10⁻⁴ torr, oxygen gas was supplied at 250 cm³/min and the screening plate 90 was adjusted so that the evaporated metal falls on the base film B at an incidence angle in the range of 45° to 90°.

The magnetic metal thin films of magnetic recording media thus formed were coated respectively with protective metal films of different metals in a thickness of 150 Å by a RF sputtering process and the corrosion resistance of the magnetic recording media was examined. Process conditions of the RF sputtering process were 300 W in supply power and 3 × 10⁻³ torr in Ar gas pressure. The corrosion resistance was evaluated by saturation magnetization change ratio ΔMs₁ measured after storing the magnetic recording media for twenty days in an atmosphere of 50°C and RH 90%, and saturation magnetization change ratio ΔMs₂ measured after storing the magnetic recording media for twelve hours in an atmosphere of 5 ppm SO₂ gas, 35°C and RH 80%. Measured results are shown in Table 1.

As is obvious from Table 1, protective metal films of Ni and Cr are highly effective on the improvement of the corrosion resistance of the magnetic recording media.

The effect of the thickness of the Ni film on the improvement of corrosion resistance was examined. The effect was evaluated by saturation magnetization change ratio ΔMs₂ measured after storing the magnetic recording media for twelve hours in a 0.5 ppm SO₂ gas atmosphere of 35°C and RH 80%, relative reproduced output (reproduced output relative to that of a magnetic recording medium not provided with any protective Ni film) at wavelength of 0.5 µm and error rate. Measured results are shown in Table 2.

It is known from Table 2 that a thicker protective Ni film has higher effect on the improvement of corrosion resistance. However, the reproduced output decreases and the error rate increases with the increase of the thickness. Accordingly, the thickness of the protective Ni film must be selectively determined taking-into consideration both the advantageous effect on the improvement of corrosion resistance and the disadvantageous effect of the protective Ni film on the performance of the magnetic recording medium.

Magnetic recording media provided each with a two-layer protective film consisting of a 150 Å thick metal film (lower layer) and a 150 Å thick abrasion-resistant protective film (upper layer) were fabricated. The upper and lower layers of the respective two-layer protective films of different magnetic recording media were fabricated by different materials. The durability, corrosion resistance and error rate of the magnetic recording media were examined. Measured results are shown in Table 3. The durability, i.e., the still mode endurance, was evaluated on the basis of time in which the output decreased to 3 dB in a still mode. Corrosion resistance was tested by a gas tester and evaluated on the basis of the observed condition of the surface, and saturation magnetization change ratio ΔMs₂ measured after storing the magnetic recording media for twelve hours in a SO₂ gas atmosphere of 35°C and RH 80%.

As is obvious from Table 3, although the metal film improves the corrosion resistance of the magnetic recording medium, the durability of the magnetic recording medium provided with only a metal film as a protective film is insufficient and the error rate of the same is high. The magnetic recording medium provided with a two-layer protective film consisting of a metal film and an abrasion-resistant protective film is satisfactory in both durability and corrosion resistance and has a low error rate. Error rate must be 1 × 10⁻⁴ or below to enable errors to be corrected by the digital VTR using error correction code of redundancy on the order of 20%. From such a point of view, the metal film reduces error rate below the foregoing limit. A two-layer protective film consisting of a metal film of Ni and an abrasion-resistant protective film of carbon is most effective, and the magnetic recording medium provided with such a two-layer protective film meets the requirements that still mode endurance is five hours or longer and the saturation magnetization change ratio ΔMs₂ is -5% or below.

Table 4 shows the results of examination of the performance of two-layer protective films of different combinations of metal films and abrasion-resistant protective films. The magnetic metal thin films of the examples are Co₈₀Ni₂₀ (subscript numbers of Co and Ni are values of Co content and Ni content in percent by weight) films of 0.2 µm in thickness formed by an oblique evaporation process, in which oxygen was supplied at 3.3×10⁻⁸ m³/sec. The back surfaces of the base films were coated with a 0.6 µm thick back coating film of a mixture of carbon and an urethane binder. The protective films were formed by a dc magnetron sputtering process, in which-Ar gas pressure was 0.7 Pa, the distance between the base plates was 80 mm, and the thickness of the protective films was determined by regulating the input power. Still mode endurance and saturation magnetization change ratio ΔMs₂ were measured after storing the magnetic recording media in a SO₂ gas atmosphere of 35°C and RH 80% for twenty-four hours. Measured results are shown in Table 4.

As is obvious from Table 4, the two-layer protective film of the corrosion-resistant protective film and the durable protective film improves both the corrosion resistance and the durability of the magnetic recording medium greatly. Since the thickness of the protective film was fixed, reproduced output and error was reduced scarcely and error rate changed scarcely; reproduced output was -3.7 dB relative to the reproduced output 0 dB for a magnetic recording medium not provided with any protective film when the wavelength of the signal was 0.54 µm and error rate was 9×10⁻⁶.

Table 5 shows the results of examination of the effect of the thickness of the protective film on the still mode durability and corrosion resistance of magnetic recording media provided each with a two-layer protective film consisting of a metal film of Ni and an abrasion-resistant protective film of carbon and differing from each other in the thickness of the metal film and the abrasion-resistant protective film after storing the magnetic recording media in a SO₂ gas atmosphere of 35°C and RH 80% for twelve hours.

It is known from Table 5 that the magnetic recording medium having a thicker abrasion-resistant protective film has higher still mode endurance, and the thicker the metal film, the smaller the reduction of saturation magnetization. However, as mentioned above, if the protective film is excessively thick, the reproduced output is reduced due to spacing loss and error rate increases. Therefore, the thickness of the two-layer protective film must be selectively determined taking into consideration the effect thereof on the reproduced output and the error rate.

Table 6 shows the measured results of examination of the performance of magnetic recording media provided each with a two-layer protective film consisting of an upper layer of carbon and a lower layer of Cu. Reproduced output was measured in reproducing signals of 0.54 µm in wavelength by a magnetic head having a gap length of 0.2 µm. The speed of the magnetic head relative to the magnetic recording medium was 3.8 m/min.

It is known from Table 6 that reproduced output is reduced due to spacing loss if the two-layer protective film is excessively thick and, preferably, the thickness of the two-layer protective film is 50 nm or below. The magnetic recording medium provided with a durable protective film of a thickness in the range of 2 nm to 47 nm as the upper layer of the two-layer protective film has a still mode endurance of five hours or longer. A corrosion-resistant film of a thickness in the range of 3 nm to 48 nm as the lower layer of the two-layer protective film improves the corrosion resistance greatly.

### Second Embodiment

A magnetic recording medium in a second embodiment according to the present invention is provided with a multilayer protective film consisting of films of a corrosion-resistant metal and a hard material.

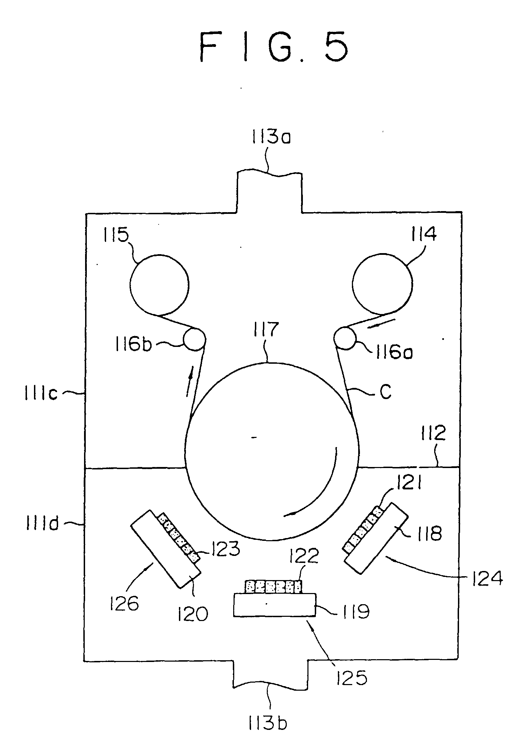

Referring to Fig. 5 showing a sputtering apparatus employed in fabricating the magnetic recording medium in the second embodiment has vacuum vessels 111c and 111d, a partition plate 112 separating the vacuum vessels 111c and 111d, a cooling cylinder 117 disposed between the vacuum vessels 111c and 111d, and evacuating systems 113a and 113b connected respectively to the vacuum vessels 111c and 111d.

A feed roller 114 for feeding a base film C consisting of a nonmagnetic support and a magnetic metal thin film formed on one major surface of the nonmagnetic support, and a take-up roll 115 are disposed in the vacuum vessel 111c. The base film c is guided by guide rollers 116a and 116b so as to travel along the circumference of the cooling cylinder 117. The base film C travel downward toward the cooling cylinder 117, along the circumference of the cooling cylinder 117 and upward toward the take-up roller 115. The diameter of the cooling cylinder 117 is greater than those of the feed roller 114 and the take-up roller 115. The effective length of the feed roller 114, the take-up roller 115 and the cooling cylinder 117 is substantially equal to the width of the base film C.

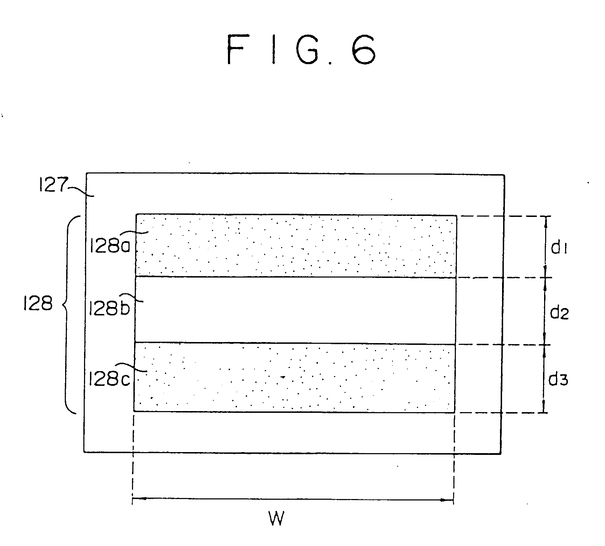

Targets 121, 122 and 123 are placed respectively on three backing plates 118, 119 and 120 of a conductive metal disposed under the cooling cylinder 117 in the vacuum vessel 111d. A negative voltage is applied to the backing plates 118, 119 and 120 to make the targets 121, 122 and 123 function as cathodes. The targets 121, 122 and 123 are corrosion-resistant metals, hard materials or a composite material composed of a corrosion-resistant metal and a hard material. When the targets 121, 122 and 123 are corrosion-resistant metals and hard materials, respectively, a required number of the corrosion-resistant metals and a required number of the hard materials are arranged so that a desired number of films of desired compositions are formed in layers to construct a desired multilayer laminate protective film. When the targets 121, 122 and 123 are composite targets, each of the targets 121, 122 and 123 may be a composite target 128 as shown in Fig. 6 consisting of three film forming materials 128a, 128b and 128c, i.e., corrosion-resistant metals and hard materials, arranged along the direction of travel of the base film C. The component materials of the composite target 128 are arranged so that a desired number of films of desired compositions are formed in layers.

Possible corrosion-resistant metals are Cr, W, Ta, Mo, Zn, Pt, V, Au and In, and possible hard materials are SiO₂, Si₃N₄, SiNₓ, BN, ZnO₂, Al₂O₃, MoS₂, SiC and carbon.

The base film C fed out by the feed roller 114 travels along the circumference of the cooling cylinder 117 in the direction of the arrow X and is taken up by the take-up roller 115. A multilayer laminate protective film is formed on the base film C by sputtering while the base film C travels along the circumference of the cooling cylinder 117.

Atoms sputtered from the cathodes 124, 125 and 126, i.e., the targets 121, 122 and 123, disposed under the cooling cylinder 117 deposit to form a multilayer laminate protective film on the base film C traveling at a constant speed along the circumference of the cooling cylinder 117. Since the required number of the targets of the corrosion-resistant metal and the required number of the targets of the hard material are arranged in a predetermined arrangement, the multilayer laminate protective film consists of corrosion-resistant protective films of the corrosion-resistant metal and durable protective films of the hard material. When composite targets are used, the multilayer laminate protective film consists of a plurality of layers of protective films of the corrosion-resistant metal and protective films of the hard material or consists of protective films of the corrosion-resistant films and protective films of the hard material and has complex interfaces between the adjacent protective films of the corrosion-resistant metal and the hard material, consisting of a mixture of the corrosion-resistant metal and the hard material.

A magnetic recording medium was fabricated, in which the foregoing sputtering apparatus was employed.

A base film C was fabricated by coating a 10 µm thick PET film with a suspension consisting of a binder containing acrylic ester as a principal constituent, SiO₂ particles of an average particle size of 18 nm and isopropyl alcohol so that the SiO₂ particle density is 10⁷ particles/mm², and forming a magnetic metal thin film of Co₈₀Ni₂₀ (subscript numerals indicate content in percent by weight) having a thickness of 200 nm in an oxygen atmosphere by oblique evaporation, in which oxygen gas was supplied at a flow rate of 300 cm³/min and the angle of incidence of metal particles on the surface of the PET film was controlled in the range of 40° to 90°. Then, the backside of the PET film was coated with a back coat of carbon and urethane.

A protective film of 200 Å in thickness was formed by a sputtering process over the magnetic metal thin film of the base film C. In the sputtering process, the targets 121, 122 and 123 were disposed at a distance of 50 mm from the cooling cylinder 117, Ar gas was used as discharge gas, and the vacuum vessels 111c and 111d were evacuated to a vacuum of 2 Pa. The materials of the targets 121, 122 and 123 were changed to fabricate magnetic recording media in a comparative example 1 and examples 1 and 2. The targets 121, 122 and 123 were 200 mm in width and 150 mm in length. A composite target as shown in Fig. 6 was used. The composite target has a target 128 placed on a backing plate 127. The target 128 consists of a carbon block 128a, a chromium block 128b and a carbon block 128c closely arranged in that order along the direction of travel of the base film C. The width W of the composite target is 200 mm, the length d₁ of the carbon block 128a is 50 mm, the length d₂ of the chromium block 128b is 50 mm and the length d₃ of the carbon block 128c is 50 mm. Electric power of 4 kW was supplied to each target. In fabricating the example 1, electric power of 1.5 kW was supplied to the target 122. The protective films of the base films C in comparative example 1 and the examples 1 and 2 were coated with perfluoropolyether, and then the base films C were cut into 8 mm wide sample magnetic tapes.

The still mode endurance time and remanent magnetic flux density change ΔBr of the sample magnetic tapes were measured to evaluate the durability and corrosion resistance, respectively, of the sample magnetic tapes. The sample magnetic tapes were subjected to shuttle tests to evaluate their sliding property. Still mode endurance time was measured by a VTR EV-S1 modified (SONY) and the output signals of the VTR was recorded by a pen recorder. The sample magnetic tapes were kept for twenty-four hours in an atmosphere of 0.3 ppm SO₂ concentration, 30°C and RH 90% before the measurement of the remanent magnetic flux density change ΔBr.

In the shuttle tests, each sample magnetic tape of a length corresponding to recording time of thirty minutes was driven 100 times on the VTR EV-S1 modified (SONY) and the difference between the initial output level and the final output level was measured. Measured results are shown in Table 7.

As is obvious from Table 7, the comparative example 1 provided with a hard, multilayer laminate protective film consisting of only carbon films has satisfactory durability, whereas the corrosion resistance and sliding property of the same are not satisfactory, the example 1 provided with a multilayer laminate protective film consisting of alternate carbon and chromium films is satisfactory in durability, corrosion resistance and sliding property, and the example 2 provided with a multilayer laminate protective film of a complex laminate construction consisting of alternate carbon and chromium films and having complex interfaces between the component films is more satisfactory in corrosion resistance and sliding property than the example 1. Thus, it is known from Table 7 that a multilayer laminate protective film consisting of protective films of a corrosion-resistant metal and protective films of a hard material and formed over a magnetic metal thin film formed on one major surface of a nonmagnetic support improves the corrosion resistance and durability of the magnetic recording medium greatly. Thus, the measured results proved that the magnetic recording medium of the present invention is suitable for use on a digital VTR. The digital VTR will be described hereinafter.

### Construction of the Recording/Reproducing Apparatus

Practical digital VTRs which convert color video signals into digital signals and record the digital signals on a recording medium, such as a magnetic tape, are classified into component digital VTRs of D1 format and composite digital VTRs of D2 format, which are intended for use by broadcasting stations.

The digital VTR of D1 format converts luminance signals and first and second color difference signals for AD conversion at sampling frequencies of 13.5 MHz and 6.75 MHz, respectively, processes the digital signals for predetermined signal processing and records the processed digital signals on a magnetic tape. Since the ratio of sampling frequencies for sampling the components of the signals is 4:2:2, the digital VTR of D1 format is designated also as a digital VTR of 4:2:2 system.

The digital VTR of D2 format samples composite color video signals at a sampling frequency four times the frequency of a color subcarrier signal for AD conversion, processes the digital signals for predetermined signal processing and records the processed digital signals on a magnetic tape.

Since both the digital VTR of D1 format and the digital VTR of D2 format are designed for use by broadcasting stations, priority is given to picture quality in designing these digital VTRs. These digital VTRs record 8-bit digital color video signals obtained by the AD conversion of samples substantially without compression.

Accordingly, the reproducing time of the digital VTR of D1 format, for instance, is only on the order of one and half hours at the most even if a large tape cassette is used and the digital VTR of D1 format is unsuitable for domestic use.

A digital VTR which will be described hereinafter records signals of the shortest wavelength of 0.5 µm on tracks of 5 µm in track width in a recording density of 8 × 10⁵ bits/mm² and employs a method of compressing recording information without entailing significant reproducing distortion to achieve long-time recording and reproducing operation even if the magnetic tape is a narrow one having a width of 8 mm or below.

### Signal Processing Unit

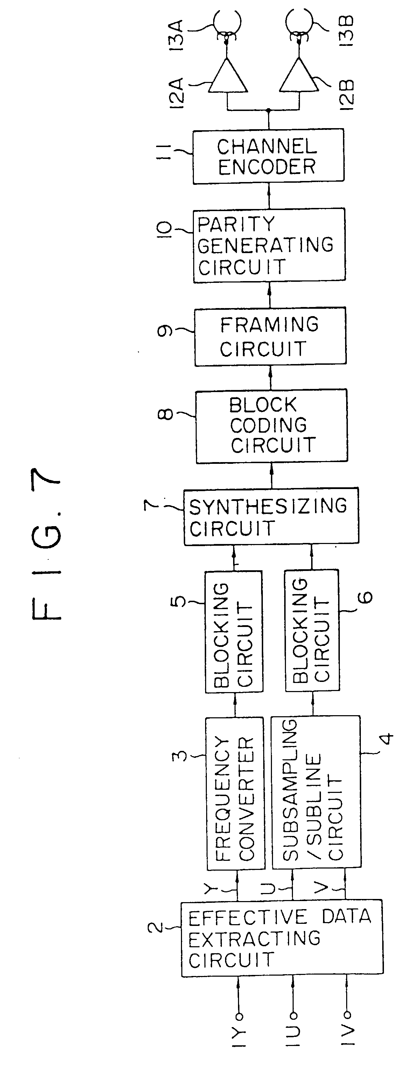

Referring to Fig. 7 showing the general construction of a recording system, digital luminance signals Y and digital color difference signals U and V extracted from three color signals R, G and B produced by, for example, a color video camera, are applied respectively to input terminals 1Y, 1U and 1V. The clock rates of the signals Y, U and V are equal to the frequencies of the component signals of D1 format. Sampling frequencies are 13.5 MHz and 6.75 MHz, and each sample is represented by eight bits. Therefore the bit rate of data of the signals applied to the input terminals 1Y, 1U and 1V is about 216 Mbps. The bit rate of data of the signals is compressed to about 167 Mbps by removing data in blanking intervals among those of the signals and extracting only the data in an effective region by an effective data extracting unit 2.

The luminance signals Y among the output signals of the effective data extracting circuit 2 are given to a frequency converter 3.. The frequency converter 3 converts the sampling frequency of 13.5 MHz into a frequency equal to 3/4 of 13.5 MHz. The frequency converter 3 employs, for example, a thinning filter to prevent convolutional distortion. The output signal of the frequency converter 3 is given to a blocking circuit 5. The blocking circuit 5 converts the sequence of luminance data into the sequence of blocks. A block coding circuit 8 is connected to the blocking circuit 5.

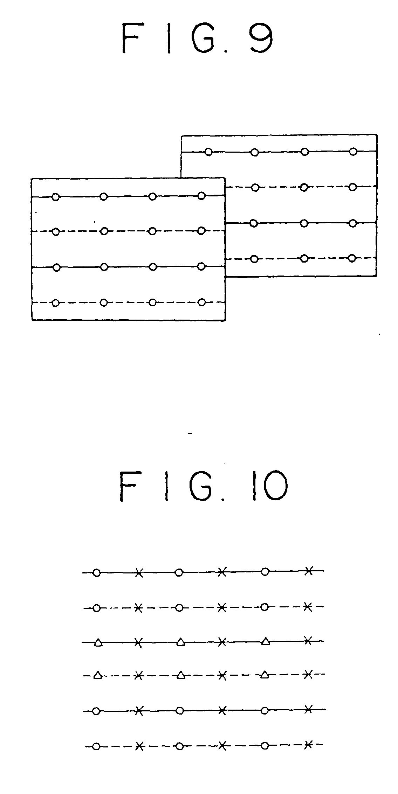

Referring to Fig. 9 showing the structure of a three-dimensional block to be coded, a plurality of blocks each of 4-line × 4-picture-element × 2-frame are formed by dividing a screen spreading over, for example, two frames. In Fig. 9, lines of odd fields are represented by continuous lines, and lines of even fields are represented by broken lines.

The two color difference signals U and V among the output signals of the effective data extracting circuit 2 are given to a subsampling/subline circuit 4. The subsampling/subline circuit 4 changes the sampling frequency of 6.75 MHz into a sampling frequency of 1/2 of 6.75 MHz. The two digital color difference signals are selected for lines and data of one channel is produced. The subsampling/subline circuit 4 provides digital signals in line sequence. Fig. 10 shows the dot construction of the signals processed by the subsampling/subline circuit 4, in which blank circles represent-subsampling dots of the first color difference signal U, blank triangles represent sampling dots of the second color difference signal V, and crosses represent dots removed by subsampling.

The line sequence output signals of the subsampling/subline circuit 4 are given to a blocking circuit 6. The blocking circuit 6, similarly to the blocking circuit 5, converts the color difference data of the scanning sequence of television signals into data of the block sequence. The blocking circuit 6 converts the color difference data into those of a 4-line × 4-dot × 2-frame structure. The output signals of the blocking circuits 5 and 6 are given to a synthesizing circuit 7.

The synthesizing circuit 7 converts the luminance signals of block sequence and color difference signals into data of one channel and gives the same to a block coding circuit 8. The block coding circuit 8 is a coding circuit suitable for the dynamic range of each block (hereinafter referred to as "ADRC") or a discrete cosine transform circuit (hereinafter referred to as "DCT circuit"). The output signal of the block coding circuit 8 is given to a framing circuit 9. The framing circuit 9 converts the input signals into the data of frame structure. In the framing circuit 9, the clock of the picture element system is changed for that of the recording system.

The output signal of the framing circuit 9 is given to a parity generating circuit 10 for generating a parity for an error correction code. The output signal of the parity generating circuit 10 is given t a channel encoder 11 for channel coding to decrease the low region of recording data. The output signal of the channel encoder 11 is applied through recording amplifiers 12A and 12B and a rotary transformer, not shown, to a pair of magnetic heads 13A and 13B to record the output signal of the channel encoder 11 on a magnetic tape. Video signals and audio signals are compressed and coded separately and given to the channel encoder 11.

The foregoing signal processing procedure extracts only the data in the effective scanning period to reduce input data from 216 Mbps to about 167 Mbps. The data is further reduced to 84 Mbps by frequency conversion, subsampling and subline. Then, the data is compressed and coded by the blocking circuit 8 to about 25 Mbps and additional data, such as parities and audio signals, are added to provide recording data of 31.56 Mbps.

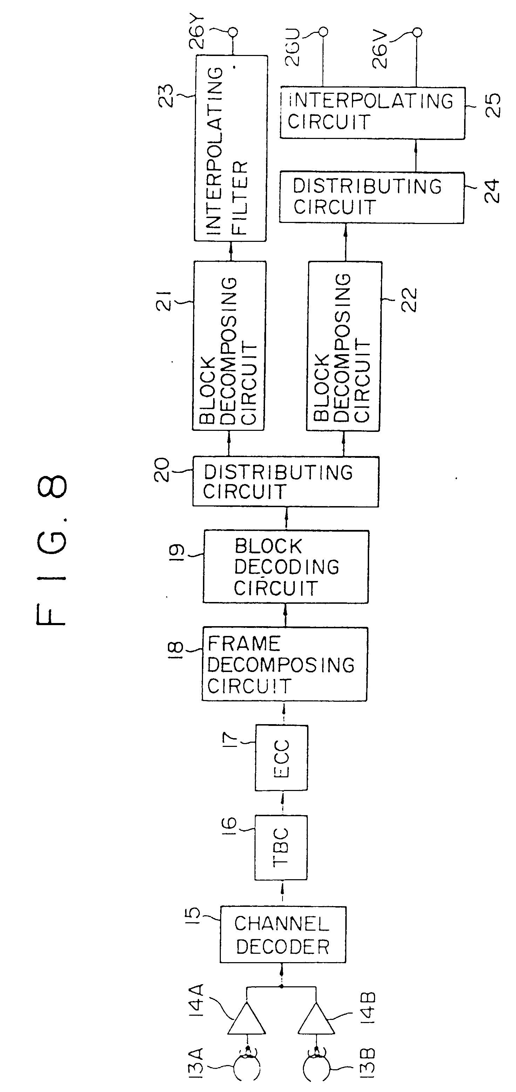

Referring to Fig. 8 showing the reproducing circuit of the signal processing unit, reproduced data read by the magnetic heads 13A and 13B are transmitted through a rotary transformer and reproducing amplifiers 14A and 14B to a channel decoder 15. The channel decoder 15 decodes the reproduced data by channel-decoding. The output signal of the channel decoder 15 is given to a TBC (time base corrector) 16. The TBC 16 removes time base errors from the reproduced data, and gives the reproduced data to an ECC 17 for error correction and error modification using error correction code. The output signal of the ECC 17 is given to a frame decomposing circuit 18.

The frame decomposing circuit 18 separates the components of the block-coded data and changes the clock of the recording system for the clock of the picture element system. The data decomposed by the frame decomposing circuit 18 is given to a block-decoding circuit 19. The block-decoding circuit 19 decodes recovered data corresponding to original data for each block, and gives decoded data to a distributing circuit 20. The distributing circuit 20 decomposes the decoded data into luminance signals and color difference signals, and gives the luminance signals and the color difference signals respectively to block decomposing circuits 21 and 22. The block decomposing circuits 21 and 22 convert the decoded data of block sequence into decoded data of raster scanning sequence. The function of the block decomposing circuits 21 and 22 is reverse to that of the blocking circuits 5 and 6 of the recording circuit.

A decoded luminance signal provided by the block decomposing circuit 21 is given to an interpolating filter 23. The interpolating filter 23 changes the sampling rate of the luminance signal from 3 fs to 4 fs (= 13.5 MHz), and supplies a digital luminance signal Y to an output terminal 26Y.

The block decomposing circuit 22 gives the digital color difference signals to a distributing circuit 24. The distributing circuit 24 sorts the line sequence digital color difference signals U and V into digital color difference signals U and V, and gives the same to an interpolating circuit 25 for interpolation. The interpolating circuit 25 interpolates the data of the extracted lines and picture elements by using the recovered picture element data and gives digital color difference signals U and V of a sampling rate of 2 fs to output terminals 26U and 26V.

### Block-Coding Circuit

A block-coding circuit 8 shown in Fig. 7 is an ADRC encoder (adaptive dynamic range coding encoder) which finds out the maximum MAX and the minimum MIN of the plurality of picture element data included in each block, determines the dynamic range DR of the block, and carries out coding operation according to the dynamic range DR for requantization using a bits' number smaller than the number of bits of the original picture element data. The block coding circuit 8 may be such a circuit that converts the picture element data of each block by DCT (discrete cosine transform) into coefficient data, quantizes the coefficient data obtained by DCT, and subjects the quantized data to Huffman run length coding for compression-coding.

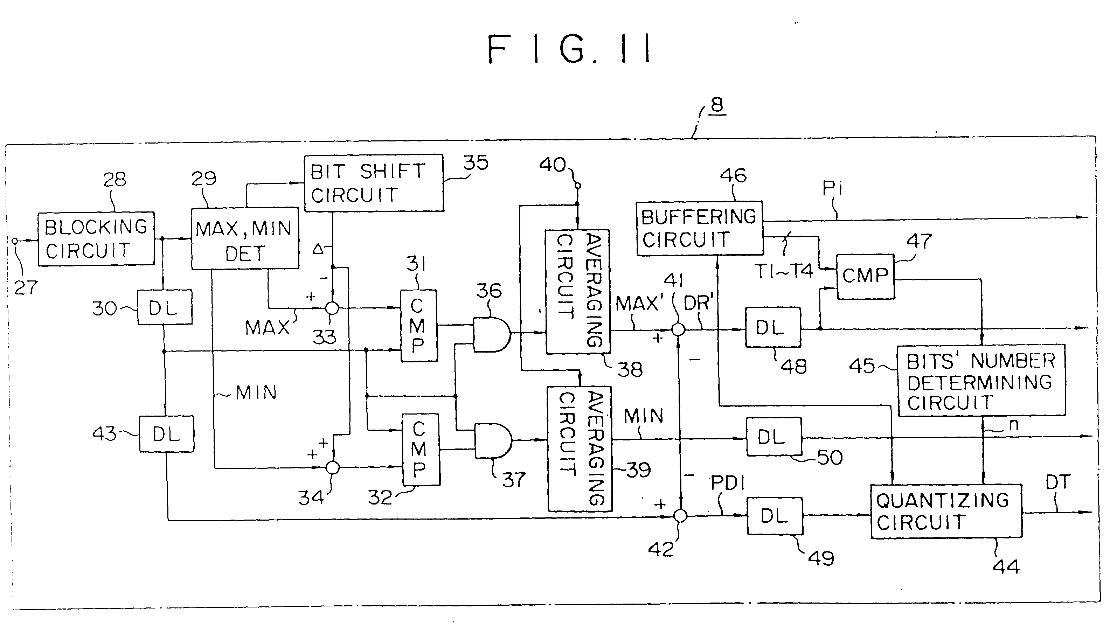

An ADRC circuit which does not deteriorate picture quality even if signals are recorded in a multidubbing mode will be described with reference to Fig. 11.

Referring to Fig. 11, the synthesizing circuit 7 (Fig. 7) applies a digital video signal (or digital color difference signal) quantized by eight bits for each sample through an input terminal 27 to a maximum/minimum detecting circuit 29 and a delay circuit 30. The maximum/minimum detecting circuit 29 detects the maximum MAX and the minimum MIN in each block. The delay circuit 30 delays receiving input data for a time required for detecting the maximum MAX and the minimum MIN. The delay circuit 30 gives picture element data to comparators 31 and 32.

The maximum MAX and the minimum MIN detected by the maximum/minimum detecting circuit 29 are given respectively to a subtracter 33 and an adder 34. A bit shift circuit 35 applies a quantizing step width Δ of 1/16 DR for nonedge-matching quantization of 4-bit fixed length to the subtracter 33 and the adder 34. The bit shift circuit 35 shifts the dynamic range DR by four bits for division of 1/16. The subtracter 33 provides a threshold of (MAX-Δ) and the adder provides a threshold of (MIN+Δ). The thresholds provided by the subtracter 33 and the adder 34 are given to the comparators 31 and 32, respectively. The quantizing step width Δ may be substituted by a fixed value corresponding to a noise level.

The output signal of the comparator 31 is applied to an AND gate 36 and the output signal of the comparator 32 is applied to an AND gate 37. The delay circuit 30 applies the input data to the AND gates 36 and 37. The output signal of the comparator 31 is HIGH when the input data is greater than the threshold. Accordingly, picture element data within a maximum level range of MAX to (MAX-Δ) among the input data appears at the output terminal of the AND gate 36. The output signal of the comparator 32 is LOW when the input data is smaller than the threshold. Accordingly, the picture element data in a minimum level range of MIN to (MIN+Δ) among the input data appears at the output terminal of the AND gate 37.

The output signal of the AND gate 36 is give to an averaging circuit 38 and the output signal of the AND gate 37 is given to an averaging circuit 39. The averaging circuits 38 and 39 calculate the respective averages of the blocks. A blocking period reset signal is applied through a terminal 40 to the averaging circuits 38 and 39. The averaging circuit 38 provides the average MAX' of the picture element data in the maximum level range of MAX to (MAX-Δ). The averaging circuit 39 provides the average MIN' of the picture element data in the minimum level range of MIN to (MIN+Δ). A subtracter 41 subtracts the average MIN' from the average MAX' to provide a dynamic range DR'.

A subtracter 42 subtracts the average MIN' from the input data given thereto through the delay circuit 43 to eliminate the minimum value from the input data and provides data PD1. The data PD1 and the corrected dynamic range DR' are given to a quantizing circuit 44. The quantizing circuit 44 employed herein is a variable-length ADRC for edge-matching quantization, in which the number of bits allocated for quantization is 0 (code signal is not transferred), 1, 2, 3 or 4. The number n of bits to be allocated to a block is determined for each block by a bits' number determining circuit 45 and the number n of allocated bits is given to the quantizing circuit 44.

The variable-length ADRC allocates smaller numbers of bits to blocks of smaller dynamic ranges DR' and allocates larger numbers of bits to blocks of larger dynamic ranges DR' for efficient coding. No code signal is transferred to and only data of a dynamic range DR' is transferred to blocks having a dynamic range DR' meeting: DR' < T1, n = 1 for blocks of a dynamic range RD' meeting: T1 ≦ DR' < T2, n = 2 for blocks of a dynamic range DR' meeting: T2 ≦ DR' < T3, n = 3 for blocks of a dynamic range DR' meeting: T3≦ DR' < T4, and n = 4 for blocks of a dynamic range DR' meeting: DR' ≧ T4, where T1 to T4 are thresholds for determining the number n of bits to be allocated to blocks.

The variable-length ADRC is capable of controlling, namely, buffering, the quantity of data to be produced by varying the thresholds T1 to T4. Accordingly, the variable-length ADRC can be applied to a transfer circuit, such as the digital VTR employed herein, in which the quantity of data for each field or each frame must be limited to a predetermined value.

A buffering circuit 46 for determining the threshold T1 to T4 for limiting the quantity of data produced to a predetermined value stores a plurality of threshold sets (T1, T2, T3, T4), for example, thirty-two sets, identified by parametric codes Pi (i = 0, 1, 2, ..., and 31). The quantity of data to be produced decreases monotonously with increase in the subscript "i" of the parametric code Pi. The picture quality of the recovered picture deteriorates with the decrease of the quantity of data to be produced.

A comparator 47 receives the thresholds T1 to T4 from the buffering circuit 46 and receives the dynamic range DR' from the subtracter 41 through a delay circuit 48. The delay circuit 48 delays the application of the dynamic range DR' to the comparator 47 for a time required for the buffering circuit 46 to determine a set of thresholds. The comparator 47 compares the dynamic range DR' of each block and the thresholds. The output signal of the comparator 47 is given to the bits' number determining circuit 45 to determine the number n of bits to be allocated to the block. The quantizing circuit 44 converts the data PD1 given thereto through a delay circuit 49 into a code signal DT by edge-matching quantization using the dynamic range DR' and the number n of the allocated bits. The quantizing circuit 44 is, for example, a ROM.

The modified dynamic range DR' and the average MIN' are provided respectively through the delay circuit 48 and a delay circuit 50, and a code signal DT and the parametric code Pi indicating a threshold set are provided. Since signals quantized by nonedge-matching quantization are quantized by edge-matching quantization on the basis of the dynamic range data, the picture quality of the picture is deteriorated scarcely by dubbing.

### Channel Encoder and Channel Decoder

The channel encoder 11 and the channel decoder 15 shown in Fig. 7 will be described hereinafter.

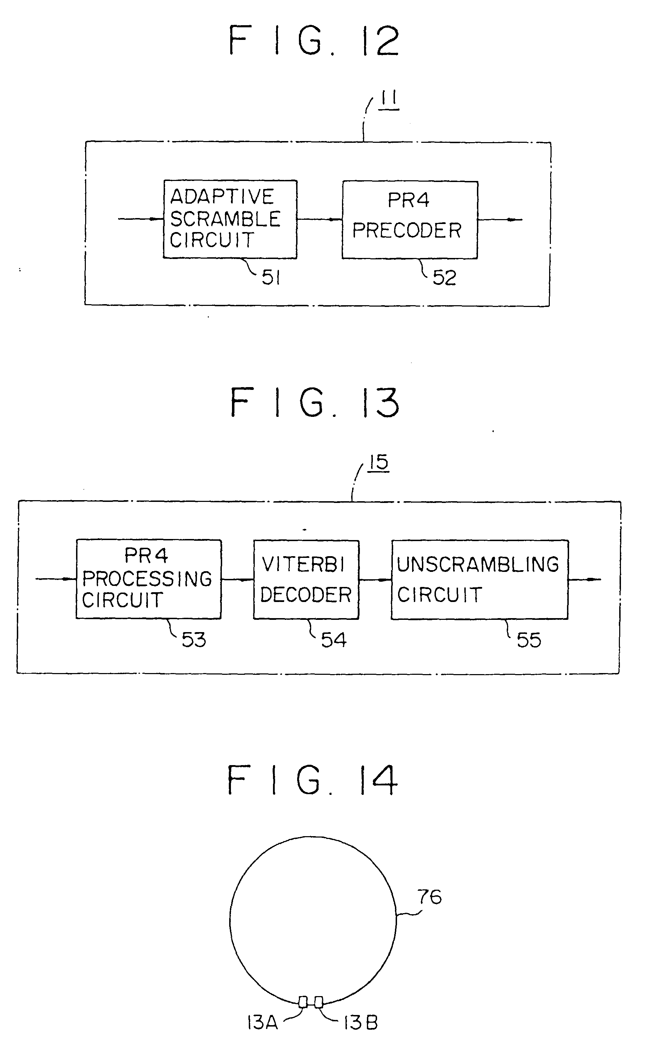

Referring to Fig. 12, the channel encoder 11 is provided with an adaptive scramble circuit 41 having a plurality of M-systems. The output signal of the parity generating circuit 10 is given to the adaptive scramble circuit 51. An M-system that provides an output signal having the least high-frequency component and the least dc component among the M-systems is selected. A recorder 52 of a partial response class 4 detecting system executes the calculation of 1/(1 - D²) (D is a circuit for unit delay). The output signals of the precoder 52 are amplified by the amplifiers 12A and 13A, and the amplified signals are recorded by the magnetic heads 13A and 13B. In reproducing the signals, reproduced signals are amplified by the amplifiers 14A and 14B.

Referring to Fig. 13, the channel decoder 15 is provided with a partial response class 4 processing circuit 53 for processing the output signals of the amplifiers 14A and 14B for the calculation of 1 + D, a what is called Viterbi decoding circuit 54, which is resistant to noise, decodes the output signals of the processing circuit 53 by using the correlation and certainty of data, and an unscrambling circuit 55 for unscrambling the data scrambled by the recording circuit to recover the original data. Block decoding by the Viterbi decoding circuit 54, as compared with bit decoding, improves the CN ratio by 3 dB.

### Electromagnetic Conversion System

The magnetic heads 13A and 13B are combined in a magnetic head unit and the magnetic head unit is mounted on a rotary drum 76 as shown in Fig. 14. A magnetic tape, not shown, is wound helically around the rotary drum 76 at a contact angle of about 180°. The magnetic heads 13A and 13B scan the magnetic tape simultaneously. The respective gaps of the magnetic heads 13A and 13B are inclined respectively in opposite directions to reduce crosstalk between the adjacent tracks due to azimuth loss in reproducing recorded data. For example, the gap of the magnetic head 13A is inclined at +20° to the direction of width of tracks and the gap of the magnetic head 13B is inclined at -20° to the direction of width of tracks.

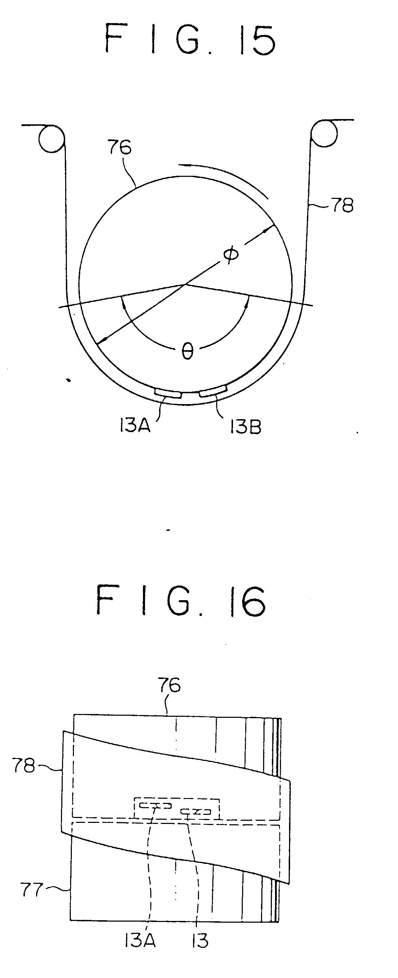

Figs. 15 and 16 show more concretely the construction of a double azimuth magnetic recording/reproducing head constructed by mounting the magnetic heads 13A and 13B in combination in a magnetic head unit on an upper drum 76 which rotates at a high rotating speed. A lower drum 77 is fixed. The contact angle θ of a magnetic tape 78 is 166° and the diameter of the upper drum 76 and the lower drum 77 is 16.5 mm. Data representing one filed is recorded on five tracks of the magnetic tape 78. This segment system shortens the length of tracks and reduces errors attributable to the inferior linearity of tracks.

The double azimuth magnetic head unit, as compared with a magnetic head unit provided with a pair of magnetic heads disposed in a diametrically opposite arrangement, is capable of reducing errors attributable to the inferior linearity of tracks and enables more accurate pairing adjustment because the distance between the magnetic heads is small. Thus, the electromagnetic conversion system thus constructed is capable of recording data on and reproducing data from narrow tracks.

As is apparent from the foregoing description, a magnetic recording medium in accordance with the present invention comprises a nonmagnetic support, a magnetic metal thin film formed on the nonmagnetic support and a protective film of a corrosion-resistant metal formed over the magnetic metal thin film. The corrosion-resistant protective film suppresses the corrosion of the magnetic metal thin film and reduces bit error rate greatly. Accordingly, compressed digital video signals can be recorded satisfactorily without entailing significant reproducing distortion.

Another magnetic recording medium in accordance with the present invention comprises a nonmagnetic support, a magnetic meal thin film formed on the nonmagnetic support, and a multilayer laminate protective film formed over the magnetic metal thin film and consisting of a corrosion-resistant protective film and a durable protective film formed of a hard material. Accordingly, the corrosion of the magnetic metal thin film is suppressed, the magnetic recording medium has improved corrosion resistance and high durability. Thus, the magnetic recording medium is capable of satisfactorily recording compressed digital video signals without entailing significant reproducing distortion.

A method of fabricating a magnetic recording medium in accordance with the present invention forms a multilayer protective film over a magnetic metal thin film formed on one major surface of a nonmagnetic support by a sputtering process in which the nonmagnetic support carrying the magnetic metal film travels along the circumference of a cooling cylinder, and the multilayer protective film is formed by depositing atoms sputtered from targets of a corrosion-resistant metal and those of a durable material or from a composite target consisting of a corrosion-resistant metal and a durable material. This method can be carried out without requiring any modification of the existing manufacturing line, enables the manufacturing line to operate at a high productivity and is of high industrial utility.

Although the invention has been described in its preferred forms with a certain degree of particularity, obviously many changes and variations are possible therein. It is therefore to be understood that the present invention may be practiced otherwise than as specifically described herein without departing from the scope of the appended claims.

**Table 1**

| Corrosion-resistant film | ΔMs₁ (%) | ΔMs₂ (%) |
|---|---|---|
| None | -6 | -12 |
| Co₆₀Ni₄₀ | -4 | -9 |
| Co₈₀Ni₂₀ | -5 | -11 |
| Ni | -2 | -3 |
| Cr | -2 | -5 |

**Table 2**

| Thickness (Å) | ΔMs₂ (%) | Reproduced output (db) | Error rate |
|---|---|---|---|
| 100 | -3.8 | -1.1 | 6×10⁻⁵ |
| 150 | -3.0 | -1.6 | 6×10⁻⁵ |
| 200 | -2.5 | -2.2 | 7×10⁻⁵ |
| 300 | -1.0 | -3.5 | 8×10⁻⁵ |

**Table 3**

| Protective film | | Still mode endurance time (hr) | Corrosion resistance | | Error rate |
|---|---|---|---|---|---|
| Upper layer | Lower layer | | Surface condition | ΔMs₂(%) | |
| - | - | 2 | Δ | -15 | 5×10⁻⁴ |
| Carbon | - | > 10 | Δ | -16 | 7×10⁻⁴ |
| SiO₂ | - | 10 | Δ | -12 | 2×10⁻⁴ |
| - | Ni | 0.5 | ⓞ | -3 | 4×10⁻⁵ |
| - | Cr | 0.5 | ○ | -8 | 8×10⁻⁵ |
| SiO₂ | Ni | 8 | ⓞ | -5 | 4×10⁻⁵ |
| Carbon | Ni | > 10 | ⓞ | -4 | 4×10⁻⁵ |
| Carbon | Cr | > 10 | ○ | -9 | 9×10⁻⁵ |

**Table 4**

| Upper protective film (15nm) | Lower protective film (15nm) | Corrosion resistance ΔMs₃ | Still mode endurance (hr) |
|---|---|---|---|
| Carbon | - | -21 | >10 |
| SiO₂ | - | -26 | >10 |
| - | Cu | -2.1 | 0.1 |
| - | Cr | -3.4 | 0.5 |
| Carbon | Cu | -2.0 | >10 |
| ditto | Cr | -3.3 | >10 |
| ditto | Zr | -4.1 | >10 |
| ditto | Zn | -2.4 | >10 |
| SiO₂ | Cu | -2.3 | >10 |
| ditto | Cr | -3.7 | >10 |
| ditto | Zr | -4.3 | >10 |
| ditto | Zn | -2.5 | >10 |
| - | - | -40 | 2 |

**Table 5**

| Thickness (Å) | | Still mode endurance time (hr) | ΔMs₂ (%) |
|---|---|---|---|
| Carbon | Ni | | |
| 15 | 50 | 4 | -7.3 |
| 20 | 50 | 7 | -7.1 |
| 50 | 50 | >10 | -7.0 |
| 50 | 150 | >10 | -4.0 |
| 50 | 300 | >10 | -2.2 |
| 100 | 50 | >10 | -6.8 |
| 100 | 100 | >10 | -5.0 |
| 100 | 150 | >10 | -3.8 |
| 100 | 300 | >10 | -2.1 |
| 150 | 50 | >10 | -6.8 |
| 150 | 100 | >10 | -4.8 |
| 150 | 150 | >10 | -3.6 |
| 150 | 300 | >10 | -1.9 |
| 300 | 50 | >10 | -6.7 |
| 300 | 100 | >10 | -4.8 |
| 300 | 150 | >10 | -3.6 |

**Table 6**

| Upper protective film(carbon) (nm) | Lower protective film(Cu) (nm) | Thickness of protective film (nm) | Corrosion resistance ΔMS₃ (%) | Still mode endurance | Reproduced output (dB) | Initial error rate |
|---|---|---|---|---|---|---|
| - | - | 0 | -40 | 2 | 0 | 3×10⁻⁵ |
| 15 | 2 | 17 | -31 | >10 | -2.2 | 7×10⁻⁵ |
| 20 | 32 | 52 | -0.6 | >10 | -6.7 | 4×10⁻⁴ |
| 1.5 | 10 | 11.5 | -2.0 | 4 | -1.5 | 6×10⁻⁵ |
| 15 | 3 | 18 | -18 | >10 | -2.3 | 7×10⁻⁵ |
| 15 | 5 | 20 | -12 | >10 | -2.5 | 7×10⁻⁵ |
| 15 | 10 | 25 | -2.4 | >10 | -3.2 | 8×10⁻⁵ |
| 46 | 3 | 49 | -16 | >10 | -5.8 | 1×10⁻⁴ |
| 10 | 3 | 13 | -19 | >10 | -1.7 | 6×10⁻⁵ |
| 10 | 10 | 20 | -2.1 | >10 | -2.6 | 7×10⁻⁵ |
| 10 | 20 | 30 | -0.8 | >10 | -3.8 | 8×10⁻⁵ |
| 2 | 10 | 12 | -2.6 | 7 | -1.6 | 6×10⁻⁵ |
| 2 | 46 | 48 | -0.1 | 8 | -5.8 | 1×10⁻⁴ |
| 2 | 3 | 5 | -19 | 7 | -0.6 | 4×10⁻⁵ |
| 1.5 | 2 | 3.5 | -34 | 3 | -0.4 | 4×10⁻⁵ |

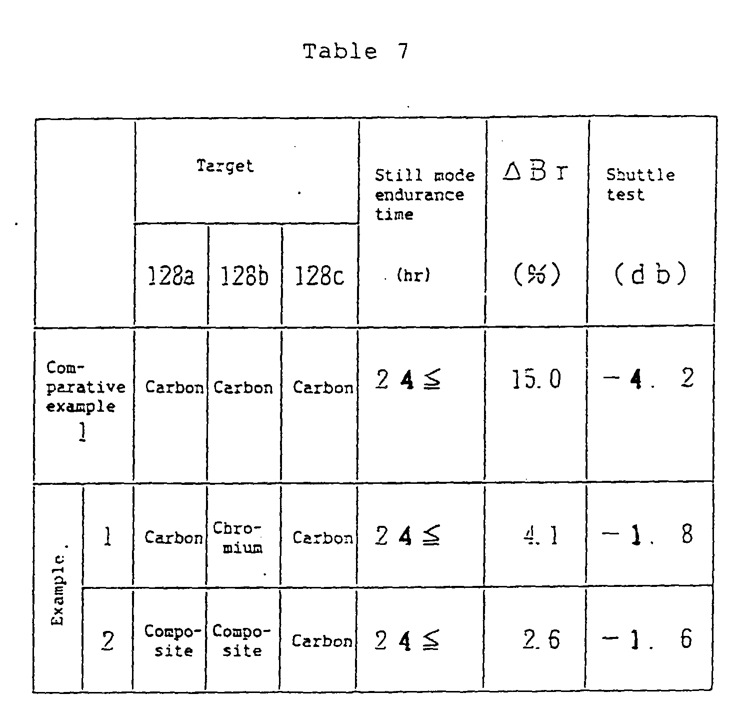

## Claims

1. A method of fabricating a magnetic recording medium comprising a step of forming a protective film (105) by a sputtering process on a nonmagnetic support (101) provided with a magnetic metal thin film (102) on one major surface thereof and traveling along the circumference of a cooling cylinder, wherein at least one target of a corrosion-resistant metal and at least one target of a hard material are arranged around the cooling cylinder to form the protective film (105) in a laminate structure consisting of at least a corrosion-resistant protective film (103) of the corrosion-resistant metal and a durable protective film (104) of the hard material.

2. A method of fabricating a magnetic recording medium comprising a step of forming a protective film (105) by a sputtering process on a nonmagnetic support (101) provided with a magnetic metal thin film (102) on one major surface thereof and traveling along the circumference of a cooling cylinder, wherein at least one composite target composed of a corrosion-resistant metal and a hard material is disposed near the cooling cylinder to form the protective film (105) in a laminate structure consisting of at least a corrosion-resistant protective film (103) of the corrosion-resistant metal and a durable protective film (104) of the hard material.

3. A method for recording input video signals (Y, U, V) on a magnetic recording medium produced according to claim 1 or 2, which comprises a nonmagnetic support (101); a magnetic metal thin film (102) formed on the nonmagnetic support (101); and
either a corrosion-resistant film (103) of a corrosion-resistant metal or a multi-layer laminate protective film (105) consisting of a corrosion-resistant protective film (103) of corrosion-resistant metal and a durable protective film (104) of hard material formed over the magnetic metal thin film (102)
**characterized by** the steps of converting the input digital video signals into block data each consisting of a plurality of picture element data, compressing-coding each block data to obtain compressing coded data, channel coding the compressing coded data to obtain channel coded data, and recording the channel coded data on the magnetic recording medium with magnetic heads (13A, 13B) mounted on a rotary drum (76).

## Patentansprüche

1. Verfahren zur Herstellung eines magnetischen Aufzeichnungsträgers, aufweisend einen Schritt der Bildung eines Schutzfilms (105) durch Sputtern auf einem nicht-magnetischen Träger (101), der mit einem magnetischen Metalldünnfilm (102) an einer seiner Hauptflächen versehen ist und sich längs des Umfangs eines Kühlzylinders bewegt, wobei wenigstens ein Target aus einem korrosionsfesten Metall und wenigstens ein Target aus einem Hartmaterial um den Kühlzylinder herum angeordnet sind, um den Schutzfilm (105) in einer Laminatstruktur bestehend aus wenigstens einem korrosionsfesten Schutzfilm (103) aus dem korrosionsfesten Metall und einem dauerhaften Schutzfilm (104) aus dem Hartmaterial zu bilden.

2. Verfahren zur Herstellung eines magnetischen Aufzeichnungsträgers aufweisend einen Schritt der Bildung eines Schutzfilms (105) durch Sputtern auf einem nicht-magnetischen Träger (101), der mit einem magnetischen Metalldünnfilm (102) an einer seiner Hauptseiten versehen ist und sich längs des Umfangs eines Kühlzylinders bewegt, wobei wenigstens ein Komposittarget aus einem korrosionsfesten Metall und aus einem Hartmaterial in der Nähe des Kühlzylinders angeordnet ist zur Bildung des Schutzfilms (105) in einer Laminatstruktur bestehend aus wenigstens einem korrosionsfesten Schutzfilm (103) des korrosionsfesten Metalles und einem dauerhaften Schutzfilm (104) des Hartmetalles.

3. Verfahren zur Aufzeichnung von Eingangs-Videosignalen (Y, U, V) auf einem gemäß den Ansprüchen 1 oder 2 hergestellten magnetischen Aufzeichnungsträger, der einen nicht-magnetischen Träger (101), einen magnetischen Metalldünnfilm (102) auf dem nicht-magnetischen Träger (101) und
entweder einen korrosionsfesten Film (103) aus einem korrosionsfesten Metall oder einen Vielschicht-Laminat-Schutzfilm (105) aufweist bestehend aus einem korrosionsfesten Schutzfilm (103) aus dem korrosionsfesten Metall und einem dauerhaften Schutzfilm (104) aus einem Hartmaterial, der über dem magnetischen Metalldünnfilm (102) gebildet ist, gekennzeichnet durch die Schritte des Umsetzens der Eingangs-Digital-Videosignale in Blockdaten, die jeweils aus mehreren Bilddatenelementen bestehen, Kompressionscodieren von jedem der Blockdaten zum Erhalten von komprimierten codierten Daten, Kanalcodieren der komprimierten Daten zum Erhalten von kanalcodierten Daten, und Aufkeichnen der kanalcodierten Daten auf dem magnetischen Aufzeichnungsträger mit Magnetköpfen (13A, 13B), die auf einer Drehtrommel (76) angebracht sind.

## Revendications

1. Procédé de fabrication d'un support d'enregistrement magnétique, comprenant une étape de formation d'un film protecteur (105) par une opération de pulvérisation sur un support non magnétique (101) muni d'un mince film métallique magnétique (102) sur une de ses grandes faces et se déplaçant à la circonférence d'un cylindre de refroidissement, dans lequel une cible au moins d'un métal résistant à la corrosion et une cible au moins d'un matériau dur sont placées autour du cylindre de refroidissement pour la formation d'un film protecteur (105) avec une structure stratifiée constituée d'au moins un film protecteur résistant à la corrosion (103) du métal résistant à la corrosion et un film protecteur durable (104) du matériau dur.

2. Procédé de fabrication d'un support d'enregistrement magnétique, comprenant une étape de formation d'un film protecteur (105) par une opération de pulvérisation sur un support non magnétique (101) ayant un mince film métallique magnétique (102) sur une de ses grandes faces et se déplaçant à la circonférence d'un cylindre de refroidissement, dans lequel une cible composite au moins, composée d'un métal résistant à la corrosion et d'un matériau dur, est disposée près du cylindre de refroidissement pour la formation du film protecteur (105) avec une structure stratifiée constituée d'au moins un film protecteur résistant à la corrosion (103) du métal résistant à la corrosion et d'un film protecteur durable (104) du matériau dur.

3. Procédé d'enregistrement de signaux vidéo reçus (Y, U, V) sur un support d'enregistrement magnétique produit selon la revendication 1 ou 2, qui comprend un support non magnétique (101), un mince film métallique magnétique (102) formé sur le support non magnétique (101), et
soit un film résistant à la corrosion (103) d'un métal résistant à la corrosion, soit un film protecteur stratifié multicouche (105) constitué d'un film protecteur résistant à la corrosion (103) d'un métal résistant à la corrosion et d'un film protecteur durable (104) d'un matériau dur formé sur le mince film métallique magnétique (102),
caractérisé par des étapes de conversion des signaux numériques vidéo reçus en données par blocs formés chacun de plusieurs données d'éléments d'image, de compression-codage de chaque donnée de bloc pour l'obtention de données codées comprimées, de codage de canaux des données codées comprimées pour l'obtention de données codées par canaux, et d'enregistrement des données codées par canaux sur le support d'enregistrement magnétique à l'aide de têtes magnétiques (13A, 13B) montées sur un tambour rotatif (76).
